# FASCICULE DE BREVET EUROPEEN

(11) **EP 0 666 042 B1**
(45) Date de publication et mention de la délivrance du brevet: **27.08.1997**
(21) Numéro de dépôt: 95400247.3
(22) Date de dépôt: 06.02.1995
(51) Int. Cl.: A47B 73/00, A47B 47/00, F16B 12/32

(54) **Elément de rangement, notamment pour ranger des bouteilles en position couchée, et ensemble de rangement réalisé à partir de tels éléments**
Ablageelement, insbesondere zur horizontalen Ablage von Flaschen und mit solchen Elementen ausgeführte Ablageeinheit
Storage unit, especially for storing bottles horizontally and storage assembly made from such units

(30) Priorité: 08.02.1994 FR 9401406
(43) Date de publication de la demande: 09.08.1995
(73) Titulaire: SANBRI, F-60120 Breteuil-sur-Noye (FR)
(72) Inventeur: Richard, Pierre, F-75016 Paris (FR)
(74) Mandataire: Jaunez, Xavier

(56) Documents cités:
- DE-C- 932 517
- NL-A- 6 513 910
- US-A- 2 558 611
- US-A- 4 023 681

## Description

L'invention concerne la réalisation d'éléments de rangement, notamment pour ranger des bouteilles en position couchée.

On connaît déjà de nombreux éléments de rangement pour objets plats ou cylindriques constitués par des étagères montées sur un châssis, avec un assemblage par vissage, collage ou accrochage en suspension.

Ces éléments sont en général volumineux, et ne conviennent pas à un déplacement rapide. De plus, leur assemblage exige des moyens mécaniques supplémentaires (vis, tiges, taquets, crochets par exemple), ce qui alourdit les coûts de fabrication et augmente le temps nécessaire au montage ou au démontage (quand celui-ci est encore possible).

Lorsque les objets à ranger sont des bouteilles, on utilise souvent des celliers métalliques de type conventionnel, constitués par un châssis parallélépipédique dans lequel sont agencées des tiges ondulées recevant les bouteilles en position couchée. Une telle ossature est en général soudée, et elle est essentiellement fixe en raison de son poids et de son encombrement. Il n'est alors pas question de démonter la structure.

On utilise aussi des meubles de rangement, avec étagères et porte pivotante. Il s'agit cependant là encore de structures massives et non conçues pour être démontées ou déplacées rapidement.

On utilise encore, pour un petit nombre de bouteilles, des râteliers de formes diverses, en bois ou en métal.

Pour illustrer l'état de la technique on peut citer diverses solutions ayant fait l'objet de dépôts de brevets. Le document DE-C-932 517 décrit un élément de rangement de bouteilles réalisé en cornières encochées, avec un renforcement par un croisillon central et des parois de séparation. Le document US-A-4,023,681 décrit un autre élément de rangement de bouteilles à faces d'appui inclinées, dont le cadre est constitué de quatre pans rectangulaires.

Le document NL-A-65 13910 décrit un treillis à bouteilles accroché à une paroi, formé de deux cadres rectangulaires superposés. Le document US-A-2,558,611 décrit enfin un élément de rangement réalisé par des panneaux filaires reliés entre eux par soudage, donc formant une structure unitaire indémontable.

L'invention a pour but de concevoir un élément de rangement qui soit à la fois de structure simple, permettant un assemblage ou un démontage rapide sans avoir à utiliser les traditionnels moyens d'assemblage mentionnés plus haut.

L'invention a également pour but de concevoir un élément de rangement dont la structure permette un agencement modulaire par juxtaposition et/ou superposition d'éléments essentiellement identiques.

Il s'agit plus particulièrement d'un élément de rangement, notamment pour ranger des bouteilles en position couchée, caractérisé en ce qu'il est constitué par une pluralité de cadres filaires identiques, de forme générale essentiellement carrée ou rectangulaire, agencés successivement l'un derrière l'autre en s'étendant chacun dans un plan vertical, et par des plaques de support agencées pour former un support en X inscrit dans chacun des cadres filaires, lesdites plaques de support présentant, au niveau de leur(s) bord(s) d'extrémité, des encoches permettant l'accrochage de chacun des cadres filaires au niveau des angles intérieurs de ceux-ci, lesdits cadres étant dimensionnés pour assurer un auto-blocage du support en X, de sorte que l'élément de rangement ainsi assemblé conserve sa forme par le seul maintien mutuel desdits cadres et dudit support en X.

Conformément à un mode d'exécution particulier, le support en X est formé de quatre plaques de support en contact mutuel par un bord d'appui arrondi de chacune de ces plaques.

De préférence alors, les quatre bords d'appui en contact sont verrouillés entre eux par une broche centrale à quatre fentes parallèles dans chacune desquelles est reçu un bord d'appui arrondi. En variante, les quatre bords d'appui présentent chacun une fente d'extrémité s'étendant parallèlement audit bord, et ces quatre bords en contact sont verrouillés entre eux par un croisillon cruciforme dont les ailes passent dans les fentes précitées.

Selon une autre possibilité intéressante, les quatre bords d'appui sont en appui direct sur un barreau central en matériau élastique, ledit barreau conférant un effet ressort tendant à repousser les quatre plaques de support contre les angles intérieurs des cadres filaires.

Avantageusement encore, les plaques de support présentent des bords arrondis sur leurs quatre chants, lesdits bords étant tournés vers le dessous des plaques correspondantes. Il est également possible de prévoir que les plaques de support présentent une portion centrale ajourée.

Selon le type d'objets concernés, il pourra s'avérer intéressant que l'élément de rangement comporte une ou plusieurs entretoises verticales agencées entre deux plaques de support, pour définir au moins un sous-compartiment de rangement.

On pourra également prévoir que les cadres filaires comportent sur leur branche de base horizontale une succession d'écrasements localisés tournés vers le haut et présentant, en vue frontale, un profil en arc de cercle.

Il est par ailleurs avantageux que le cadre filaire frontal et/ou le cadre filaire arrière présentent, au voisinage de certains au moins de leurs angles, des méplats permettant un assemblage d'éléments superposés ou juxtaposés au moyen d'une clé à deux clips pinçant deux cadres adjacents au niveau desdits méplats.

L'invention concerne également un ensemble de rangement réalisé par juxtaposition et/ou superposition d'éléments de rangement présentant l'une au moins des caractéristiques précitées, lesquels éléments sont alors assemblés entre eux par leur cadre frontal et/ou arrière au moyen de clips.

Selon un mode d'exécution particulier de cet ensemble de rangement, ledit ensemble est complété par des éléments de rangement annexes réalisés avec les mêmes cadres filaires, mais ces cadres étant maintenus par deux entretoises verticales opposées de façon à libérer totalement l'espace intérieur auxdits cadres.

D'autres caractéristiques et avantages de l'invention apparaîtront plus clairement à la lumière de la description qui va suivre et des dessins annexés, concernant un mode de réalisation particulier, en référence aux figures où :
- la figure 1 illustre en perspective un élément de rangement conforme à l'invention, ici à trois cadres filaires;
- la figure 2 est une vue frontale de l'élément de rangement précédent;
- la figure 3 illustre en perspective l'une des quatre plaques de support formant le support en X de l'élément de rangement précité;
- la figure 4 est une coupe verticale, à plus grande échelle, montrant la zone centrale d'appui des bords arrondis des quatre plaques formant le support en X précité, avec ici un appui de ces bords contre un barreau central en matériau élastique;
- la figure 5 illustre en perspective une broche centrale de verrouillage utilisable à l'une et/ou l'autre extrémité de la zone centrale d'appui du support en X;
- la figure 6 est une coupe verticale illustrant une autre variante dans laquelle le verrouillage est assuré par un croisillon cruciforme;
- la figure 7 illustre un cadre filaire dont la branche de base présente des écrasements localisés améliorant le maintien latéral des objets concernés (notamment des bouteilles), et dont les angles inférieurs présentent des méplats d'assemblage modulaire;
- les figures 8 et 9 sont des vues frontales et de dessus, de l'un des écrasements de maintien précités;

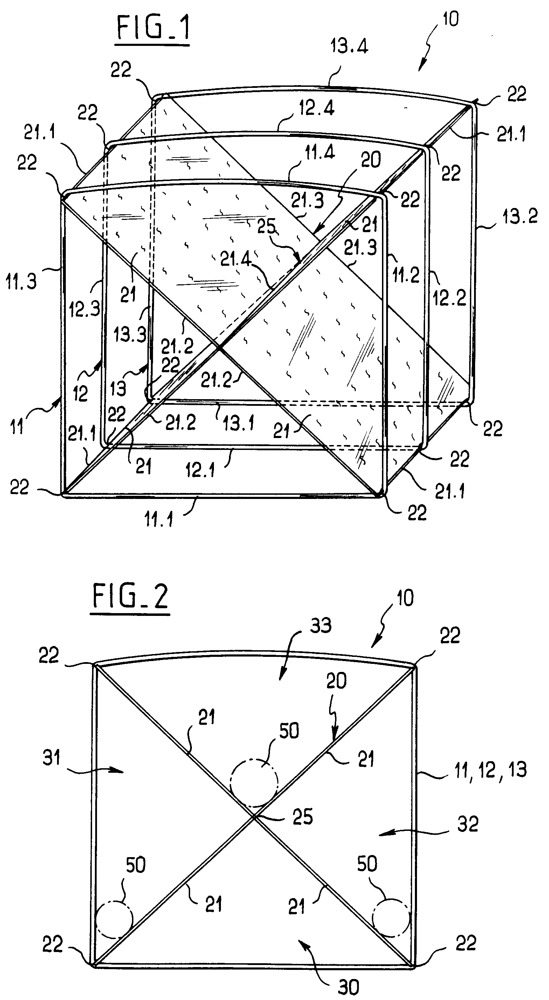

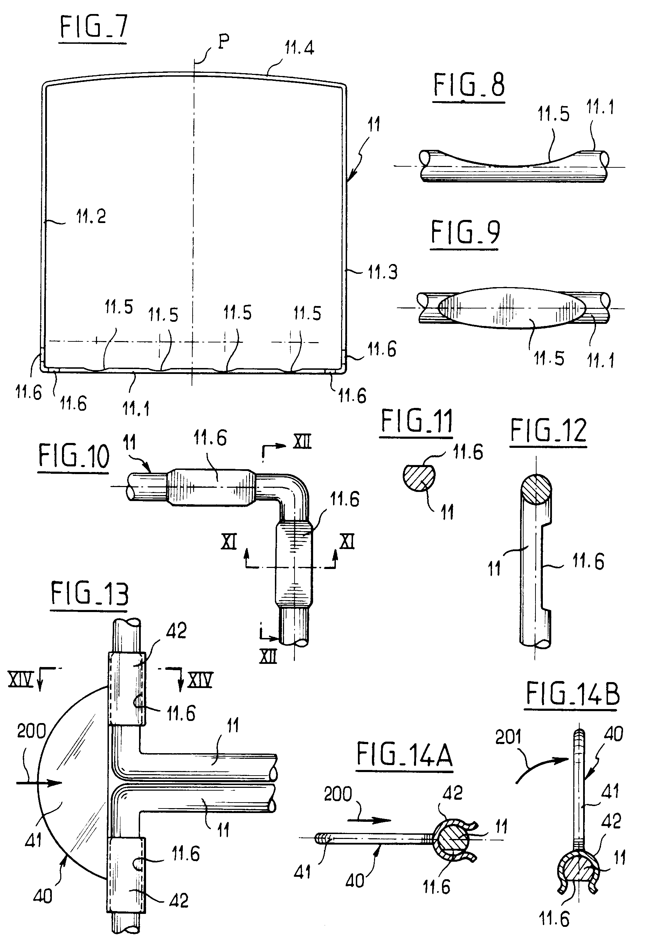

- la figure 1O illustre, à plus grande échelle, un angle de cadre filaire à méplats, cette vue étant complétée par les figures 11 et 12 qui en sont des coupes selon XI-XI et XII-XII;
- la figure 13 illustre l'assemblage de deux cadres filaires (ici superposés), utilisant une clé à deux clips (ici dans sa position de mise en place) ;
- les figures 14A et 14B sont deux coupes selon XIV-XIV de la figure 13, montrant la clé respectivement en position de mise en place et en position finale de verrouillage, après un pivotement d'environ 90° de ladite clé;

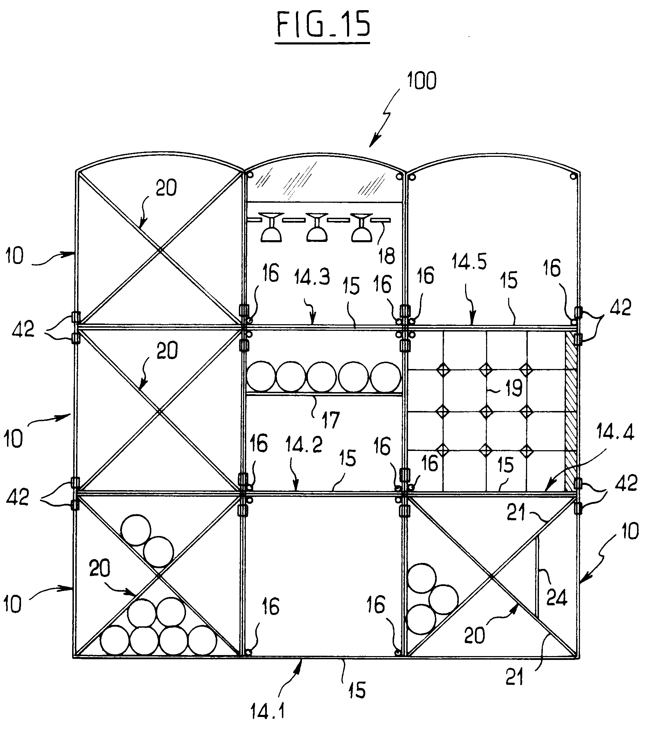

- la figure 15 illustre en vue frontale un ensemble de rangement réalisé par juxtaposition et superposition d'éléments de rangement du type précité, avec aussi des éléments de rangement annexes ayant les mêmes cadres filaires, mais sans support en X, les six éléments illustrés étant par exemple assemblés entre eux au moyen de clips.

Les figures 1 et 2 illustrent un élément de rangement 10 conforme à l'invention, permettant notamment de ranger des bouteilles en position couchée, ces bouteilles étant schématisées en trait mixte en 50 sur la figure 2.

Conformément à l'invention, l'élément de rangement 10 est constitué par une pluralité de cadres filaires identiques, ici trois cadres 11, 12, 13, de forme générale essentiellement carrée ou rectangulaire, agencés successivement l'un derrière l'autre en s'étendant chacun dans un plan vertical, et par des plaques de support 21 agencées pour former un support en X 20 inscrit dans chacun des cadres filaires 11, 12, 13, lesdites plaques de support présentant, au niveau de leur(s) bord(s) d'extrémité, des encoches 22 permettant l'accrochage de chacun des cadres filaires 11, 12, 13 au niveau des angles intérieurs de ceux-ci, lesdits cadres étant dimensionnés pour assurer un auto-blocage du support en X 20, de sorte que l'élément de rangement 10 ainsi assemblé conserve sa forme par le seul maintien mutuel desdits cadres et dudit support en X.

L'élément de rangement présente ainsi quatre espaces de rangement, notés 30, 31, 32, 33 sur la figure 2.

La structure précitée est donc extrêmement simple, dans la mesure où elle ne comporte aucun moyen d'assemblage du type vis, taquets, etc.., en étant essentiellement constituée de cadres filaires et de plaques de support formant un support en X.

Le nombre de cadres filaires utilisés sera naturellement fonction du dimensionnement, et en particulier de la profondeur, de l'élément de rangement concerné. Par exemple, pour un élément de rangement destiné à recevoir un nombre de 30 à 40 bouteilles en position couchée, on prévoira un ensemble de trois cadres filaires de forme générale essentiellement carrée avec un côté de l'ordre de 50 cm, le cadre central 12 étant distant du cadre frontal 11 et du cadre arrière 13 d'une distance de l'ordre de 11 cm.

Le support en X 20 est donc rentré à force à l'intérieur de chacun des cadres filaires de l'élément de rangement, et ces cadres filaires sont parfaitement maintenus en place grâce aux encoches d'extrémité 22. Le dimensionnement des cadres filaires, et en particulier le dimensionnement de leur diagonale, est prévu pour que le support en X soit rentré à force dans chacun des cadres filaires. Ceci est essentiel pour obtenir l'auto-blocage du support en X, avec la conservation de la forme de l'élément assemblé par le seul maintien mutuel des cadres filaires et dudit support en X.

Les cadres filaires 11, 12, 13 comprennent chacun une branche de base 11.1, 12.1, 13.1, deux branches latérales 11.2 et 11.3, 12.2 et 12.3, 13.2 et 13.3, et une branche supérieure 11.4, 12.4, 13.4. Sur les figures 1 et 2, la branche supérieure de chacun des cadres filaires 11, 12, 13, est légèrement cintrée. Il va de soi que l'on pourra prévoir une branche supérieure rectiligne, notamment lorsqu'il s'agira de superposer un autre élément de rangement au-dessus de cet élément de rangement. Dans la pratique, les branches supérieures cintrées seront alors réservées aux éléments de rangement situés en partie haute de l'ensemble de rangement ainsi constitué par juxtaposition et/ou superposition d'éléments de rangement du type illustré aux figures 1 et 2.

Le support en X 20 pourra être constitué au choix de deux, trois, ou quatre plaques de support 21.

Dans le cas de deux plaques, dont la longueur correspond à la diagonale des cadres filaires, on prévoira alors que chacune des plaques présente une fente médiane concernant une partie de sa largeur, de façon à permettre un encastrement central des deux plaques pour constituer un support en X. Dans le cas de trois plaques, on pourra alors prévoir une plaque dont la longueur correspond à la diagonale des cadres filaires, et deux plaques concernant une demi-diagonale, avec une zone d'appui qui pourra par exemple être renforcée en prévoyant des lumières dans la plus grande plaque, lumières dans lesquelles sont alors reçues des pattes saillantes ménagées aux bords d'extrémité en regard des deux petites plaques. Enfin, si l'on a prévu un ensemble de quatre plaques de support, on obtient une réalisation particulièrement simple et performante.

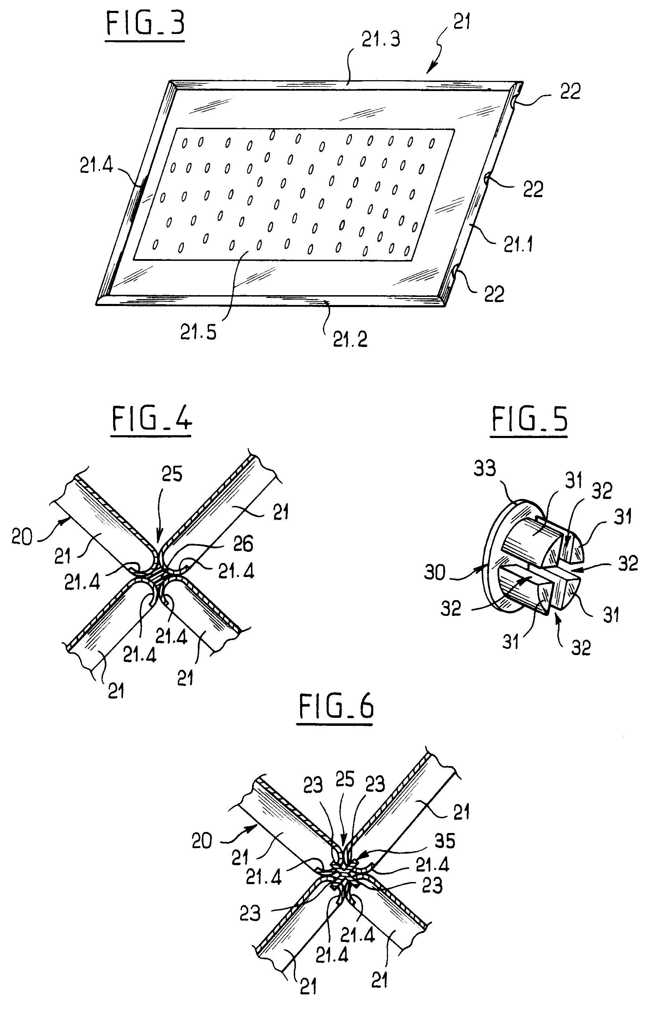

On a illustré ici une telle variante à quatre plaques formant chacune une demi-diagonale, mais il reste entendu que l'invention n'est pas limitée à un tel mode d'exécution particulier. Chaque plaque de support 21 comporte ainsi un bord d'extrémité 21.1, un bord frontal 21.2, un bord arrière 21.3, et un bord central d'appui 21.4. Il est avantageux de prévoir que les quatre plaques de support 21 sont en contact mutuel par un bord d'appui de forme arrondie de chacune de ces plaques. Il est cependant intéressant de prévoir des bords arrondis sur les quatre chants des plaques de support, lesdits bords étant tournés vers le dessous des plaques correspondantes. Ceci permet d'obtenir des bords à contour doux, en évitant des arêtes tranchantes, tout en renforçant la rigidité propre de chacune des plaques de support. Les encoches 22 sont alors prévues au niveau d'un bord arrondi 21.1, dont le rayon est de préférence de l'ordre de 3,5 mm. Le nombre et la position des encoches 22 seront choisis en fonction des objets concernés. Avec des bouteilles, on pourra préférer avoir un cadre frontal assez avancé, ce qui impliquera un positionnement particulier des encoches correspondantes. En outre, en cas de disposition asymétrique des encoches, on pourra éventuellement doubler la disposition prévue avec une disposition symétrique (ce qui aboutirait ici à six encoches) pour permettre une interchangeabilité des plaques entre elles. La figure 3 illustre une telle plaque de support 21, plaque sur laquelle il est prévu une portion centrale ajourée 21.5 permettant d'améliorer la ventilation des objets supportés, ce qui est particulièrement intéressant dans le cas de bouteilles.

La zone centrale d'appui, notée 25, des quatre bords arrondis 21.4 est mieux visible sur la figure 4. On constate sur cette figure que tous les bords d'appui arrondis 21.4 sont tournés vers le dessous des plaques 21 correspondantes. Il pourra s'avérer intéressant, comme cela est illustré sur la figure 4, de prévoir que les quatre bords d'appui 21.4 des plaques 21 sont en appui direct contre un barreau central 26 en matériau élastique (de section en as de carreau comme illustré ici, ou de toute autre forme adéquate) : ce barreau, agencé parallèlement aux bords d'appui, confère, de par son élasticité, un effet ressort très favorable car il tend à repousser les quatre plaques 21 contre les angles intérieurs des cadres filaires, et donc améliore la fiabilité de l'accrochage entre les plaques et les cadres filaires au niveau des encoches d'extrémité 22.

Bien qu'il s'agisse d'un appui naturel assuré par l'élasticité propre des cadres filaires, il est intéressant de prévoir un verrouillage supplémentaire de sécurité au niveau de cette zone centrale d'appui 25. A titre d'exemple, on a illustré sur la figure 5 une broche 30 capable de verrouiller entre eux les quatre bords d'appui 21.4. Cette broche centrale 30 comporte quatre blocs adjacents 31 définissant entre eux quatre fentes parallèles 32 dans chacune desquelles est reçu un bord d'appui arrondi. La broche centrale 30 comporte de préférence un corps 33 en forme de pastille qui permet de faire fonction de cabochon de fermeture lorsque cette broche est mise en place, au niveau de l'extrémité frontale et éventuellement aussi de l'extrémité arrière de la zone d'appui 25. Il sera naturellement possible de parfaire encore le maintien de l'ensemble, en prévoyant une tige filetée solidaire de la broche frontale et passant au centre des fentes 32 de ladite broche, laquelle tige passe dans l'espace central ménagé entre les bords d'appui arrondis 21.4, et la broche arrière présentant un perçage laissant passer l'extrémité de cette tige filetée, de façon à pouvoir visser un écrou de blocage (variante non représentée).

La figure 6 illustre une autre variante, selon laquelle les quatre bords d'appui 21.4 présentent chacun une fente d'extrémité 23, de préférence disposée dans une zone centrale de ces bords, ladite fente s'étendant parallèlement au bord d'appui associé. Les quatre bords d'appui 21.4 en contact mutuel sont alors verrouillés entre eux par un croisillon cruciforme 35 dont les ailes passent dans les fentes 23 précitées.

Sur la figure 7, on a illustré un aménagement selon lequel les cadres filaires, ici le cadre 11, comportent sur leur branche de base horizontale 11.1, une succession d'écrasements localisés 11.5 tournés vers le haut et présentant, en vue frontale, un profil en arc de cercle. Les vues partielles des figures 8 et 9 permettent de mieux distinguer ces écrasements localisés 11.5. Le rayon du profil circulaire, et la distance entre les centres concernés seront naturellement choisis en fonction du dimensionnement des objets cylindriques à ranger, par exemple des bouteilles. A titre indicatif, pour un cadre filaire dont le côté mesure environ 40 cm, on prévoira alors un ensemble de quatre écrasements localisés 11.5, avec un rayon de 4 cm, et des distances mutuelles de l'ordre de 8 à 9 cm. La disposition sera de préférence symétrique par rapport à un plan vertical médian P.

Sur la figure 7, on distingue également des méplats 11.6 au voisinage des angles inférieurs du cadre filaire, ces méplats étant ici tournés vers l'extérieur, c'est-à-dire vers l'avant pour le cadre frontal 11. On pourra naturellement préférer, pour des raisons d'esthétique, d'agencer ces méplats latéralement ou vers l'arrière. Les figures 1O à 12 permettent de mieux comprendre la forme de tels méplats 11.6, lorsque ces méplats sont réalisés par un écrasement ou pressage localisé. Ces méplats 11.6 sont particulièrement intéressants lorsque l'on souhaite assembler plusieurs éléments de rangement, par superposition et/ou par juxtaposition, car on peut prévoir un outillage simple permettant de verrouiller les cadres adjacents, la position de verrouillage étant maintenue grâce aux méplats précités.

Ainsi, sur la figure 13, on distingue une clé 40 comportant un manche 41 en forme de segment de disque circulaire, sur le bord droit duquel sont rapportés deux clips 42 présentant une section transversale en forme de Ω. Lorsque deux éléments de rangement identiques ont été superposés, on réalise alors un verrouillage des cadres filaires frontaux 11, et éventuellement aussi des cadres filaires arrière. La clé 40 est alors insérée selon la flèche 200, de telle façon que ces deux clips 42 viennent envelopper les méplats 11.6 des branches verticales de chacun des deux cadres superposés dans un même plan vertical, comme illustré sur la figure 14A. Ensuite, comme cela est illustré sur la figure 14B, il suffit d'imprimer à la clé 40 une rotation d'environ 90°, selon la flèche 201, pour ramener les deux clips 42 dans une position stable de verrouillage dans laquelle les cadres superposés sont parfaitement maintenus contre un déplacement latéral. La coopération entre les méplats 11.6 et les extrémités recourbées des deux clips 42 permet de conférer la stabilité à cette position de verrouillage, position dans laquelle la clé est en outre effacée en vue frontale, ce qui garantit une esthétique particulièrement favorable. Le verrouillage est alors obtenu avec une fiabilité et une précision très satisfaisantes.

Cette technique d'assemblage permet de réaliser, facilement et rapidement, un ensemble de rangement en superposant et/ou juxtaposant différents éléments de rangement 10 présentant une structure du type précité.

On a ainsi illustré sur la figure 15 un ensemble de rangement 100 réalisé par superposition et juxtaposition d'éléments de rangement 10 du type précité, avec aussi d'autres éléments de rangement annexes ayant les mêmes cadres filaires, mais sans support en X. Sur la colonne de gauche de l'ensemble 100, on retrouve trois éléments de rangement 10 du type précédemment décrit, et l'on a schématisé les clips 42 des clés d'assemblage correspondantes. Sur la colonne centrale, on trouve trois éléments de rangement annexes 14.1, 14.2, 14.3, réalisés avec des cadres filaires 15 identiques à ceux des éléments de rangement adjacents, la rigidité de ces éléments annexes étant donnée par des entretoises verticales opposées 16, par exemple en forme d'échelle couchée horizontalement. A cet effet, on pourra alors prévoir que les cadres filaires 15 présentent, au niveau de leurs angles intérieurs, une encoche (non visible ici) permettant un encliquetage de ces entretoises verticales 16. L'espace de l'élément annexe 14.1 est ainsi totalement disponible pour le rangement d'objets. L'élément 14.2 présente quant à lui une étagère intermédiaire 17, et l'élément supérieur 14.3 est équipé d'un système de râtelier 18 permettant de suspendre des verres. Sur la colonne de droite, on distingue inférieurement un élément de rangement 10 du type précité. On a illustré ici un mode d'exécution particulier selon lequel l'élément de rangement 10 comporte une ou plusieurs entretoises 24 agencées entre deux plaques de support 21, pour définir au moins un sous-compartiment de rangement. Ces entretoises verticales 24 pourront être constituées par plusieurs tiges, ou encore par une plaque unique. Au-dessus de cet élément de rangement 10, on trouve deux éléments de rangements annexes 14.4 et 14.5, le premier étant équipé d'un treillis intérieur 19 permettant de ranger individuellement des bouteilles ou d'autres objets, et le second étant complètement dégagé pour un rangement en masse. Ces deux derniers éléments annexes de rangement comportent, comme les précédents, les mêmes cadres filaires 15, avec un maintien assuré par des entretoises verticales opposées 16.

Pour éviter d'avoir toutes les clés de verrouillage à clips sur une même face de l'ensemble de rangement 100 ainsi réalisé, on pourra par exemple décider d'utiliser sur la face frontale de cet ensemble 100 les clés à clips pour assembler entre eux les éléments de rangement superposés (ce sont alors les branches latérales des cadres filaires frontaux qui sont concernées), et d'utiliser des clés identiques en face arrière pour assembler entre eux les éléments de rangement juxtaposés (ce sont alors les branches inférieures ou supérieures qui sont concernées par cet assemblage).

L'ensemble de rangement 100 illustré constitue ainsi un véritable système architecturé de rangement de bouteilles, dont le montage peut être effectué à la fois aisément et rapidement, avec une multiplicité de combinaisons possibles pour sa configuration. La structure reste en outre légère, de sorte qu'il est aisé de déplacer cet ensemble. Il est également aisé de démonter l'ensemble ainsi réalisé, cette opération pouvant être réalisée sans le moindre outil nécessaire, puisqu'il suffit de dégager les clés à clips, pour pouvoir enlever un à un les éléments de rangement.

D'autres aménagements de détail seront naturellement envisageables. On peut par exemple citer la possibilité, pour l'accrochage des cadres filiaires, de remplacer chaque encoche 22 précitée par des paires d'encoches juxtaposées comportant une encoche peu profonde et une encoche plus profonde, ce qui permet d'avoir à chaque fois deux emplacements possibles pour une même plaque support. Ainsi, lors du montage, il suffit de choisir l'emplacement conférant le meilleur maintien de l'élément de rangement. On pourra également prévoir d'ajouter des colonnes de façade profilées, par exemple clipsables sur les branches latérales d'extrémité des cadres filaires concernés. L'ensemble illustré sur la figure 15 pourra également être monté sur patins ou sur chenêts, pour éviter un contact direct avec le sol.

## Revendications

1. Elément de rangement (10), notamment pour ranger des bouteilles en position couchée, caractérisé en ce qu'il est constitué par une pluralité de cadres filaires (11, 12, 13) identiques, de forme générale essentiellement carrée ou rectangulaire, agencés successivement l'un derrière l'autre en s'étendant chacun dans un plan vertical, et par des plaques de support (21) agencées pour former un support en X (20) inscrit dans chacun des cadres filaires (11, 12, 13), lesdites plaques de support présentant, au niveau de leur(s) bord(s) d'extrémité, des encoches (22) permettant l'accrochage de chacun des cadres filaires (11, 12, 13) au niveau des angles intérieurs de ceux-ci, lesdits cadres étant dimensionnés pour assurer un auto-blocage du support en X (20), de sorte que l'élément de rangement (10) ainsi assemblé conserve sa forme par le seul maintien mutuel desdits cadres et dudit support en X.

2. Elément de rangement selon la revendication 1, caractérisé en ce que le support en X (20) est formé de quatre plaques de support (21) en contact mutuel par un bord d'appui arrondi (21.4) de chacune de ces plaques.

3. Elément de rangement selon la revendication 2, caractérisé en ce que les quatre bords d'appui (21.4) en contact sont verrouillés entre eux par une broche centrale (30) à quatre fentes parallèles (32) dans chacune desquelles est reçu un bord d'appui arrondi.

4. Elément de rangement selon la revendication 2, caractérisé en ce que les quatre bords d'appui (21.4) présentent chacun une fente d'extrémité (23) s'étendant parallèlement audit bord, et ces quatre bords en contact sont verrouillés entre eux par un croisillon cruciforme (35) dont les ailes passent dans les fentes précitées.

5. Elément de rangement selon la revendication 2, caractérisé en ce que les quatre bords d'appui (21.4) sont en appui direct sur un barreau central (26) en matériau élastique, ledit barreau conférant un effet ressort tendant à repousser les quatre plaques de support (21) contre les angles intérieurs des cadres filaires.

6. Elément de rangement selon l'une des revendications 2 à 5, caractérisé en ce que les plaques de support (21) présentent des bords arrondis (21.1, 21.2, 21.3, 21.4) sur leurs quatre chants, lesdits bords étant tournés vers le dessous des plaques correspondantes.

7. Elément de rangement selon l'une des revendications 2 à 6, caractérisé en ce que les plaques de support (21) présentent une portion centrale ajourée (21.5).

8. Elément de rangement selon l'une des revendications 2 à 7, caractérisé en ce qu'il comporte une ou plusieurs entretoises verticales (24) agencées entre deux plaques de support (21), pour définir au moins un sous-compartiment de rangement.

9. Elément de rangement, selon l'une des revendications 1 à 8, caractérisé en ce que les cadres filaires (11, 12, 13) comportent sur leur branche de base horizontale (11.1) une succession d'écrasements localisés (11.5) tournés vers le haut et présentant, en vue frontale, un profil en arc de cercle.

10. Elément de rangement selon l'une des revendications 1 à 9, caractérisé en ce que le cadre filaire frontal (11) et/ou le cadre filaire arrière (13) présentent, au voisinage de certains au moins de leurs angles, des méplats (11.6) permettant un assemblage d'éléments superposés ou juxtaposés au moyen d'une clé (40) à deux clips (42) pinçant deux cadres adjacents au niveau desdits méplats.

11. Ensemble de rangement (100), caractérisé en ce qu'il est réalisé par juxtaposition et/ou superposition d'éléments de rangement (10) selon l'une quelconque des revendications précédentes, qui sont assemblés entre eux par leur cadre frontal (11) et/ou arrière (13) au moyen de clips (42).

12. Ensemble de rangement (100) selon la revendication 11, caractérisé en ce qu'il est complété par des éléments de rangement annexes (14.1, 14.2, 14.3, 14.4, 14.5) réalisés avec les mêmes cadres filaires (15), mais ces cadres étant maintenus par deux entretoises verticales opposées (16) de façon à libérer totalement l'espace intérieur auxdits cadres.

## Claims

1. A storage element (10), in particular for storing bottles in a horizontal position, characterised in that it is formed by a plurality of identical filar frames (11, 12, 13) of essentially square or rectangular general shape which are arranged successively one behind the other, each extending in a vertical plane, and by support plates (21) arranged to form an X-shaped support (20) inscribed in each of the filar frames (11, 12, 13), said support plates having at the location of their end edges, notches (22) permitting hooking engagement of each of the filar frames (11, 12, 13) at the location of the inside corners thereof, said frames being dimensioned to ensure self-locking of the X-shaped support (20) in such a way that the storage element (10) when assembled in that fashion retains its shape just by mutual maintenance of said frames and said X-shaped support.

2. A storage element according to claim 1 characterised in that the X-shaped support (20) is formed by four support plates (21) in mutual contact by way of a rounded bearing edge (21.4) of each of said plates.

3. A storage element according to claim 2 characterised in that the four bearing edges (21.4) in contact are locked with each other by a central bar (30) having four parallel slots (32), in each of which is received a rounded bearing edge.

4. A storage element according to claim 2 characterised in that the four bearing edges (21.4) each have an end slot (23) extending parallel to said edge and said four edges in contact are locked with each other by a cruciform cross piece (35), the limbs of which pass into said slots.

5. A storage element according to claim 2 characterised in that the four bearing edges (21.4) bear directly against a central bar member (26) of elastic material, said bar member conferring a spring effect tending to push the four support plates (21) against the inside corners of the filar frames.

6. A storage element according to one of claims 2 to 5 characterised in that the support plates (21) have rounded edges (21.1, 21.2, 21.3, 21.4) on their four sides, said edges facing towards the bottom of the corresponding plates.

7. A storage element according to one of claims 2 to 6 characterised in that the support plates (21) have a central apertured portion (21.5).

8. A storage element according to one of claims 2 to 7 characterised in that it comprises one or more vertical braces (24) arranged between two support plates (21) to define at least one storage sub-compartment.

9. A storage element according to one of claims 1 to 8 characterised in that the filar frames (11, 12, 13) comprise on their horizontal base arm (11.1) a succession of localised upwardly facing crushed portions (11.5) which in front view are of an arcuate profile.

10. A storage element according to one of claims 1 to 9 characterised in that the front filar frame (11) and/or the rear filar frame (13) have, in the vicinity of some at least of their corners, flats (11.6) permitting the assembly of superposed or juxtaposed elements by means of a key (40) having two clips (42) gripping two adjacent frames at the location of said flats.

11. A storage assembly (100) characterised in that it is formed by the juxtaposition and/or superposition of storage elements (10) according to any one of the preceding claims, which are assembled together by way of their front frame (11) and/or their rear frame (13) by means of clips (42).

12. A storage assembly (100) according to claim 11 characterised in that it is completed by supplementary storage elements (14.1, 14.2, 14.3, 14.4, 14.5) produced with the same filar frames (15) but said frames being maintained by two opposed vertical braces (16) so as totally to clear the space internal to said frames.

## Patentansprüche

1. Ablageelement (10), insbesondere zum horizontalen Ablegen von Flaschen, dadurch **gekennzeichnet**, daß es umfaßt: eine Vielzahl identischer, im wesentlichen quadratischer oder rechteckiger Drahtrahmen (11, 12, 13), die hintereinander angeordnet sind, wobei sie sich jeweils in einer vertikalen Ebene erstrecken, sowie Trägerplatten (21), die so angeordnet sind, daß sie einen X-förmigen Träger (20) bilden, der in jeden der Drahtrahmen (11, 12, 13) einbeschrieben ist, wobei die Trägerplatten an ihrer Abschlußkante bzw. ihren Abschlußkanten Kerben (22) haben, die ein Einhängen des jeweiligen Drahtrahmens (11, 12, 13) an dessen inneren Ecken ermöglichen, wobei die Rahmen so dimensioniert sind, daß sie eine Selbstverriegelung des X-förmigen Trägers (20) gewährleisten, so daß das auf diese Weise zusammengefügte Ablageelement (10) allein aufgrund des gegenseitigen Haltes, den sich die Rahmen und der X-förmige Träger geben, seine Form bewahrt.

2. Ablageelement nach Anspruch 1, dadurch **gekennzeichnet**, daß der X-förmige Träger (20) aus vier Trägerplatten (21) gebildet ist, die über eine abgerundete Anlagekante (21.4) einer jeden dieser Platten miteinander in Kontakt stehen.

3. Ablageelement nach Anspruch 2, dadurch **gekennzeichnet**, daß die vier in Kontakt stehenden Anlagekanten (21.4) durch einen zentralen Zapfen (30) mit vier parallelen Schlitzen (32), in denen jeweils eine abgerundete Anlagekante aufgenommen ist, miteinander verriegelt sind.

4. Ablageelement nach Anspruch 2, dadurch **gekennzeichnet**, daß die vier Anlagekanten (21.4) jeweils einen Endschlitz (23) haben, der sich parallel zur Kante erstreckt, und daß die vier in Kontakt stehenden Kanten durch eine kreuzförmige Strebe (35) miteinander verriegelt sind, deren Schenkel sich in die vorgenannten Schlitze erstrecken.

5. Ablageelement nach Anspruch 2, dadurch **gekennzeichnet**, daß die vier Anlagekanten (21.4) direkt an einem zentralen Stab (26) aus elastischem Material anliegen, wobei der Stab eine Federwirkung hat, durch die die vier Trägerplatten (21) gegen die inneren Ecken der Drahtrahmen vorgespannt sind.

6. Ablageelement nach einem der Ansprüche 2 bis 5, dadurch **gekennzeichnet**, daß die Trägerplatten (21) an allen vier Seiten abgerundete Kanten (21.1, 21.2, 21.3, 21.4) haben, wobei diese Kanten zur Unterseite der jeweiligen Platte weisen.

7. Ablageelement nach einem der Ansprüche 2 bis 6, dadurch **gekennzeichnet**, daß die Trägerplatten (21) einen durchbrochenen Mittelteil (21.5) haben.

8. Ablageelement nach einem der Ansprüche 2 bis 7, dadurch **gekennzeichnet**, daß es eine oder mehrere vertikale Verstrebungen (24) hat, die zwischen zwei Trägerplatten (21) angeordnet sind, um mindestens ein zusätzliches Ablagefach zu bilden.

9. Ablageelement nach einem der Ansprüche 1 bis 8, dadurch **gekennzeichnet**, daß die Drahtrahmen (11, 12, 13) an ihrem unteren horizontalen Abschnitt (11.1) eine Reihe von örtlich begrenzten Einbuchtungen (11.5) haben, die nach oben weisen und in der Vorderansicht ein kreisbogenförmiges Profil haben.

10. Ablageelement nach einem der Ansprüche 1 bis 9, dadurch **gekennzeichnet**, daß der vordere Drahtrahmen (11) und/oder der hintere Drahtrahmen (13) in der Nachbarschaft mindestens einiger ihrer Ecken Abflachungen (11.6) haben, die ein Zusammenbauen von übereinander oder nebeneinander angeordneten Elementen mittels einer Klammer (40) mit zwei Federklemmen (42) ermöglichen, mit denen zwei einander benachbarte Rahmen an den Abflachungen zusammengeklammert sind.

11. Ablageeinheit (100), dadurch **gekennzeichnet**, daß sie aus neben- und/oder übereinander angeordneten Ablageelementen (10) nach einem der vorhergehenden Ansprüche gebildet ist, wobei die Ablageelemente mittels Federklemmen (42) an ihrem vorderen Rahmen (11) und/oder hinterem Rahmen (13) miteinander verbunden sind.

12. Ablageeinheit (100) nach Anspruch 11, dadurch **gekennzeichnet**, daß sie durch angebaute Ablageelemente (14.1, 14.2, 14.3, 14.4, 14.5,) ergänzt ist, die mit denselben Drahtrahmen (15) gebaut sind, wobei diese Rahmen jedoch von zwei einander gegenüberliegenden vertikalen Verstrebungen (16) gehalten sind, so daß der innerhalb der Rahmen liegende Raum vollständig freigehalten ist.
